# EUROPEAN PATENT SPECIFICATION

(11) **EP 3 424 624 B1**
(45) Date of publication and mention of the grant of the patent: **06.12.2023**
(21) Application number: 17760121.8
(22) Date of filing: 02.03.2017
(51) Int. Cl.: B22F 5/00, C22C 1/05, C22C 1/10, C22C 9/02, C22C 9/06, F16C 17/02, F16C 33/10, F16C 33/14, F16C 33/12, B22F 3/02, B22F 5/10, B22F 9/08, C22C 1/04

(54) **SINTERED SLIDING BODY EXHIBITING EXCELLENT CORROSION RESISTANCE, HEAT RESISTANCE, AND WEAR RESISTANCE, AND PRODUCTION METHOD THEREFOR**
GESINTERTER GLEITKÖRPER MIT HERVORRAGENDER KORROSIONSBESTÄNDIGKEIT, WÄRMEBESTÄNDIGKEIT UND VERSCHLEISSFESTIGKEIT SOWIE HERSTELLUNGSVERFAHREN DAFÜR
CORPS DE GLISSEMENT FRITTÉ PRÉSENTANT UNE EXCELLENTE RÉSISTANCE À LA CORROSION, UNE EXCELLENTE RÉSISTANCE À LA CHALEUR ET UNE EXCELLENTE RÉSISTANCE À L'USURE, ET SON PROCÉDÉ DE PRODUCTION

(30) Priority: 04.03.2016 JP 2016042854
(43) Date of publication of application: 09.01.2019
(73) Proprietor: Diamet Corporation, Niigata-shi Niigata 950-8640 (JP)
(72) Inventor: ISHII Yoshinari, Niigata-shi Niigata 950-8640 (JP); MARUYAMA Tsuneo, Niigata-shi Niigata 950-8640 (JP); TAKEZOE Shinichi, Niigata-shi Niigata 950-8640 (JP)
(74) Representative: Hoffmann Eitle
(86) International application number: PCT/JP2017/008257
(87) International publication number: WO 2017/150658

(56) References cited:
- EP-A1- 1 808 503
- EP-A1- 2 639 321
- EP-A1- 2 851 444
- WO-A1-2006/022337
- JP-A- 2003 221 602
- JP-A- 2004 324 712
- JP-A- 2006 199 977
- JP-A- 2015 187 307
- US-A1- 2009 011 268

## Description

### TECHNICAL FIELD

The present invention relates to a sintered sliding body which exhibits excellent corrosion resistance, heat resistance, and wear resistance, and is applied to a sintered bearing of a fuel pump used in a fuel tank of an automobile, an exhaust valve or exhaust gas recirculation (EGR) used in a high-temperature corrosive atmosphere such as exhaust gas, and a production method therefor.

### BACKGROUND ART

Engines equipped with a motor-type fuel pump using a liquid fuel such as gasoline or light oil are used all around the world, and a bearing of the motor-type fuel pump is required to have high slidability and wear resistance.

As other examples in which sliding materials are used under a corrosive atmosphere such as exhaust gas at high temperature, sliding materials have been known which are applied to exhaust throttle valves used in a diesel exhaust gas purification system, recirculation exhaust gas flow-rate adjustment valves for an EGR-type internal combustion engine, or the like.

Further, quality of liquid fuels used in these internal combustion engines varies depending on regions. For example, depending on regions, there are regions in which poor-quality bad gasoline including sulfur, acid, and the like is used, and bearing sliding materials used for a motor-type fuel pump are also required to have high corrosion resistance.

In the related art, as an example of a bearing sliding material for these type of applications, a sliding material consisting of a Cu-Ni-based sintered alloy having a composition of Cu-21% to 35% of Ni-5% to 12% of Sn-3% to 7% of C-0.1 % to 0.8% of P is known (see Patent Document 1).

Further, a sintered sliding material obtained by dispersing free graphite in a base (matrix) of a Cu-Ni-Sn-based solid solution or a Cu-Ni-Sn-P-based solid solution is used for bearings used under a high-temperature corrosive atmosphere such as exhaust gas (see Patent Documents 2 and 3).

### PRIOR ART DOCUMENTS

### Patent Documents

Patent Document 1: Japanese Unexamined Patent Application, First Publication No. 2006-199977
Patent Document 2: Japanese Unexamined Patent Application, First Publication No. 2004-068074
Patent Document 3: Japanese Unexamined Patent Application, First Publication No. 2006-063398

### DISCLOSURE OF THE INVENTION

### Problems to be Solved by the Invention

A bearing product supporting a rotating or sliding shaft in a fuel pump, EGR, or the like is required to have a high dimensional accuracy of an inner diameter in order to ensure assembly accuracy and to exhibit performance for a long time.

A sintered part is obtained as a product through production steps of molding a raw material mixed powder, sintering, and sizing. In order to obtain a high dimensional accuracy, it is necessary to keep a rate of dimensional change of a molded body due to sintering within a certain range. In the case where a dimension of a sintered body falls outside a design range, a predetermined sizing allowance is not obtained. Thus, it is difficult to ensure a dimensional accuracy, and there is a concern about deteriorated product yield.

However, with regard to the Cu-Ni-Sn-based sintered sliding materials of the related art disclosed in Patent Documents 1 to 3, it is necessary to use a raw material powder to which a large amount of graphite has been added in order to ensure sliding characteristics. Accordingly, dimensional change of the sintered sliding materials due to sintering is larger than that of a common bearing sintered material, and dimensional variation thereof is also large. Thus, there are problems that it is difficult to ensure dimensional accuracy of the sintered sliding materials, and a product yield may decrease.

The present invention has been made in view of the above circumstances, and the present invention aims to to provide a sintered sliding body exhibiting excellent corrosion resistance, heat resistance and wear resistance, which makes it easy to ensure dimensional accuracy as a product and is capable of improving a product yield by controlling the amount of C as an impurity contained in a matrix of a sintered body.

### Solutions for Solving the Problems

(1) In order to solve the above-mentioned problems, the sintered sliding body of the present invention is defined in claim 1.

According to studies of the present inventors, it has been found that C contained in the metal matrix of the sintered body formed of the Cu-Ni alloy grains exerts an influence on a rate of dimensional change of the sintered body. Moreover, it has been found that a trace amount of C contained in the metal matrix greatly influences the rate of dimensional change of the entire sintered body. Based on this finding, in a sintered body including Cu-Ni alloy grains which contain Ni and Sn at amounts in specified ranges and, as necessary, to which P is added, an amount of C in a metal matrix is set to be in a range of 0.001% to 0.07%. Thereby, a rate of dimensional change of the sintered body before and after sintering can be suppressed low. In the case where the amount of C in the metal matrix is decreased to 0.001% to 0.07%, the rate of dimensional change can be suppressed.

Further, as long as a sintered sliding body of Cu-Ni alloy grains in which an amount of Ni and an amount of Sn are in specified ranges and, as necessary to which an appropriate amount of P is added, excellent corrosion resistance, heat resistance, and wear resistance can also be exhibited.

(2) In the present invention, a porosity of the sintered body is 8% to 21%.

With the above-mentioned porosity, for example, in the case where the sintered sliding body is used as a bearing of a fuel pump, it is possible to alleviate a strong friction and a high surface pressure which the sintered sliding body receives under high-pressure and high-speed circulation of liquid fuel, and thereby, an action of remarkably suppressing wear is exerted. By including free graphite in grain boundaries of the sintered sliding body having the porosity, wear resistance of the sintered sliding body is improved.

(3) In the present invention, it is preferable that a Sn-rich alloy layer is formed in at least a part of an outer circumferential portion of the sintered body and in at least a part of the pores of the sintered body.

(4) In the case of producing the above-described sintered sliding body, a production method according to the present invention is defined in claim 3. In producing a sintered sliding body having the above-mentioned structure (metal structure, microstructure) and composition, in the case where the raw material powder is press-molded and sintered, and the obtained sintered body is sized, a rate of dimensional change before and after sintering can be decreased. Thus, no interference occurs in sizing, and it is possible to provide a product with high dimensional accuracy due to suppression of dimensional variations.

(5) the production method of the present invention, the graphite powder is mixed with the raw material powder so that a total sum of C contained in the raw material powder and C contained in the graphite powder becomes 4.1% to 9% in the mixed raw material powder.

Since the graphite powder mixed with the raw material powder exists as free graphite in grain boundaries of the sintered body, it contributes to excellent wear resistance of the sintered sliding material.

(6) In the production method of the present invention, a porosity of the sintered body is made to be 8% to 21%.

### Effects of the Invention

The sintered sliding body of the present invention is a sintered body obtained by sintering Cu-Ni alloy grains, and an amount of C in a metal matrix including (consisting of) these grains is suppressed to be a low amount of 0.001% to 0.07%. Thus, it is possible to provide a sintered sliding body in which a rate of dimensional change before and after sintering can be decreased to a low level and which is hard to cause a large dimensional change such as abnormal expansion or shrinkage before and after sintering and can be produced with good yield. In addition, by controlling the amount of Ni, the amount of Sn, and the amount of P contained in the metal matrix to be in suitable ranges, it is possible to provide a sintered sliding body that is excellent in wear resistance and lubricity, and is excellent in corrosion resistance as a sliding body to be used under a high-temperature corrosive environment.

Further, the sintered sliding body of the present invention is suitable as a bearing member or the like which is always immersed and used in gasoline such as a motor-type fuel pump or the like, and the present invention can provide a sintered sliding material which is excellent in corrosion resistance under a high-temperature environment even in the case of being immersed in mixed gasoline, which contains corrosive liquid such as light oil, alcohol, or other organic acids in gasoline, depending on regions.

### BRIEF DESCRIPTION OF THE DRAWINGS

FIG. 1 is a perspective view showing an example of a ring-shaped bearing member formed of a sintered sliding body according to the present invention.
FIG. 2 is an enlarged structural diagram of the sintered sliding body constituting the bearing member.
FIG. 3 is an exploded side view showing an example of a fuel pump provided with the bearing member.

### EMBODIMENTS FOR CARRYING OUT THE INVENTION

Hereinafter, one embodiment of the present invention will be described with reference to the drawings.

In the drawings used in the following description, for the purpose of emphasizing a characteristic portion, there are cases where a portion that is characteristic portion is enlarged for convenience and a dimensional ratio or the like of each constituent element is not necessarily the same as an actual one. In addition, for the same purpose, some portions that are not characteristic may be omitted for illustration.

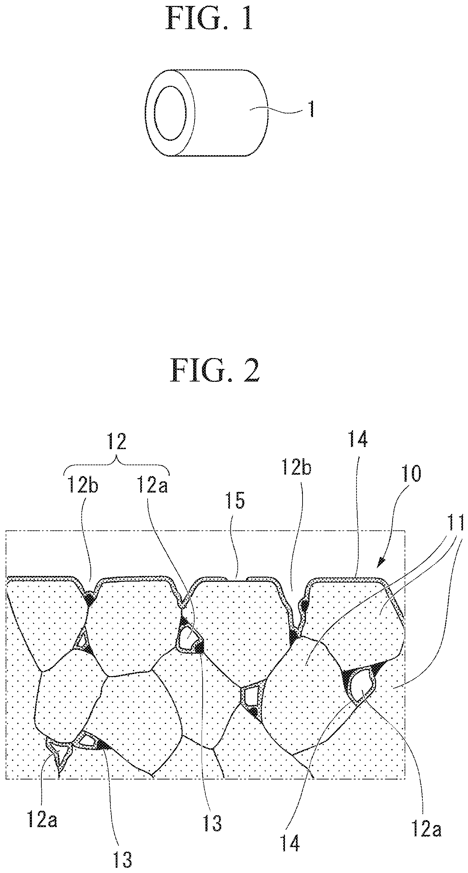

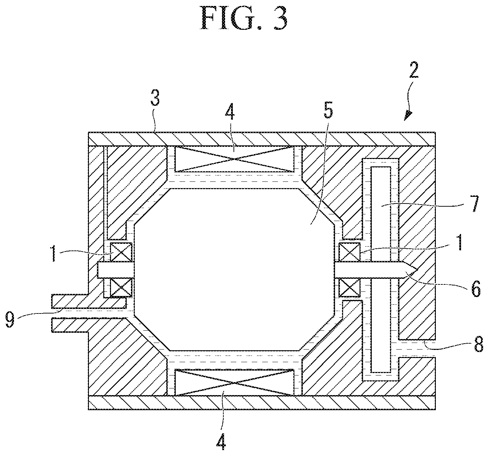

FIG. 1 shows a tubular bearing member 1 consisting of a sintered sliding body according to the present embodiment. As an example, the bearing member 1 is composed of a sintered sliding body having a sectional structure shown in FIG. 2, and is applied as a bearing member 1 in a motor-type fuel pump 2 shown in FIG. 3.

In the motor-type fuel pump 2 shown in FIG. 3, a motor (armature) 5 is provided inside a cylindrical casing 3 and surrounded by magnets 4, and both ends of a rotating shaft 6 of the motor 5 are rotatably supported by bearing members 1 which are provided, respectively, inside the casing 3.

In a configuration of FIG. 3, an impeller 7 is provided on one end side of the rotating shaft 6, and a narrow gasoline flow path is formed along an outer circumferential surface of the impeller 7, an outer circumferential surface of the motor 5, and a gap between the bearing members 1, 1 and the rotating shaft 6.

The motor-type fuel pump 2 rotates the impeller 7 by rotation of the motor 5, and gasoline is taken into the casing 3 from an intake port 8 provided on one end side of the casing 3 by a rotational force of the impeller 7 and the gasoline can flow along the above-described gasoline flow path. The gasoline can be delivered from a delivery port 9 provided on the other end side of the casing 3.

As an example, the motor-type fuel pump 2 is provided so as to be immersed in gasoline in a fuel tank of an internal combustion engine, and the delivery port 9 of the fuel pump 2 is connected to a fuel injection portion of the engine via a filter device and an injector which are not shown.

The motor-type fuel pump 2 shown in FIG. 3 is always used in a state of being immersed in gasoline and the bearing member 1 supporting the rotating shaft 6 is also used in a state of being always immersed in gasoline. Thus, excellent corrosion resistance against gasoline is desired for the bearing member 1.

Therefore, as shown in the sectional structural diagram of FIG. 2, the bearing member 1 of the present embodiment consists of the sintered sliding body 10 having a structural configuration in which pores 12 (internal pores 12a and open pores 12b) are dispersed in grain boundary portions of a plurality of alloy grains 11, and free graphite (C (Free)) 13 is dispersed inside the pores 12. The alloy grains 11 include (consist of) Cu-Ni alloy grains containing Sn, P, and C, and the plurality of alloy grains 11 are sintered to constitute a metal matrix, and the pores 12 dispersed around the alloy grains 11 and the free graphite 13 are further present to constitute the entire structure of the sintered sliding body 10.

A Sn-rich alloy layer 14 is formed on an inner surface of the internal pore 12a present in the sintered sliding body 10, on an inner surface of the open pore 12b formed to be open to a surface of the sintered sliding body 10, and at or in the vicinity of an opening of the open pore 12b. The Sn-rich alloy layer 14 contains 30 mass% or more of Sn, and has an effect of enhancing corrosion resistance of the sintered sliding body 10 against organic acids.

As shown in FIG. 2, the Sn-rich alloy layer 14 is not formed at a portion where a generation interval of the open pores 12b is wide in an outer circumferential portion of the sintered sliding body 10, and an exposed portion 15 where the alloy grains 11 are exposed may be formed. However, since the exposed portion 15 is not the open pore 12b, it hardly affects corrosion resistance against organic acids. As shown in FIG. 2, it is preferable that the Sn-rich alloy layer 14 is formed substantially over the entire outer circumferential portion of the sintered sliding body 10, and it is preferable that the Sn-rich alloy layer 14 is formed so as to close the open pores 12b on an outer surface of the sintered sliding body 10.

A method for producing the sintered sliding body 10 will be described in detail later. However, as an example thereof, the sintered sliding body 10 is obtained by a method which includes: uniformly mixing predetermined amounts of a Cu-Ni alloy powder, a Sn powder, a Cu-P powder, and a graphite powder to obtain a raw material powder; press-molding the raw material powder; and sintering the obtained molded body at a temperature of 860°C to 970°C.

Excellent sliding characteristics and corrosion resistance are ensured for the bearing member 1 due to the alloy grains 11 including (consisting of) Cu-Ni alloy grains that constitute the metal matrix. High lubricating performance is obtained due to a lubricating action of the free graphite having high lubricity and distributed in the pores 12 dispersedly distributed in the entire structure of the bearing member 1. Furthermore, wear resistance is further improved due to an action of a fluid lubricating film formed by a liquid fuel supplied from an outer circumferential surface of the bearing member 1 to an inner circumferential surface of the bearing member 1 through the pores 12 existing inside the bearing member 1.

A composition ratio of the sintered sliding body 10 is, by mass%, 10% to 35% of Ni, 5% to 12% of Sn, 0% to 0.9% of P, and 4.1% to 9% of C. In addition, the amount of C as an inevitable impurity contained in the metal matrix including (consisting of) the Cu-Ni alloy grains 11 is, by mass%, in a range of 0.001% to 0.07%. In the present specification, in the case where the range of the amount of an element is indicated, unless otherwise specified, the range includes an upper limit and a lower limit. Therefore, 10% to 35% of Ni means a range of 10% or more and 35% or less.

The reasons for limiting the respective composition ratios will be described below.

### "Ni: 10% to 35%"

Ni has an effect of imparting excellent strength, wear resistance, heat resistance, and corrosion resistance to the sintered sliding material 10. In the case where an amount of Ni is less than 10%, wear resistance, heat resistance, and corrosion resistance become insufficient to meet the desired properties for the sintered sliding material 10, and in the case where the amount of Ni exceeds 35%, material cost for the sintered sliding material is high, which is not preferable.

The amount of Ni is preferably 16% to 33%, and more preferably 20 to 28%.

### "Sn: 5% to 12%"

Sn together with Cu, Ni, and P form a solid solution in the alloy grains 11, and thereby, Sn has an effect of improving strength and wear resistance of the sintered sliding material 10. Sn causes the Sn-rich alloy layers 14 to be formed on inner surfaces of the internal pores 12a and the open pores 12b, and peripheries of openings of the open pores 12b in the sintered sliding material 10. The Sn-rich alloy layer 14 is also formed on an outer circumferential portion of the sintered material 10. The Sn-rich alloy layer 14 has an effect of improving corrosion resistance of the sintered sliding material 10. In the case where an amount of Sn is less than 5%, desired corrosion resistance and wear resistance are not obtained, and in the case where the amount of Sn is 12% or more, a large amount of liquid phases is generated during sintering and a dimension of the sintered material varies, which is not preferable.

The amount of Sn is preferably 6% to 11%, and more preferably 7 to 10%.

### "P: 0% to 0.9%"

P has an effect of improving sinterability and improving strength of a matrix with respect to the sintered sliding material 10 of the present embodiment. However, in the case where an amount of P exceeds 0.9%, deformation of a sintered body occurs and a product yield decreases, which is not preferable.

The amount of P is preferably 0.2% to 0.8%, and more preferably 0.3% to 0.6%.

### "C: 4.1% to 9%"

C mainly exists as free graphite in pores dispersedly distributed in a matrix of the sintered sliding material 10, C imparts excellent lubricity to the sintered sliding material 10, and C improves wear resistance. In the case where an amount of C is less than 4.1%, sufficient lubricating effect is not obtained and a function as a bearing material cannot be exhibited. In the case where the amount of C is 9% or more, dimensional instability occurs during sintering, which is not preferable.

The amount of C is preferably 4.2 to 8.8%, and more preferably 4.4 to 6.7%.

### " Amount of C in Cu-Ni alloy powder: 0.001% to 0.07%"

In the case where an amount of impurity carbon in the Cu-Ni alloy powder is more than 0.07%, a rate of dimensional change becomes high during sintering and a dimension is unstable, which is not preferable. The amount of C in the Cu-Ni alloy powder is in a range of 0.001 % to 0.07%. The impurity carbon amount of 0.001% is an amount which is introduced as a inevitable impurity due to carbon deoxidation or the like. The amount of impurity carbon in the Cu-Ni alloy powder corresponds to an amount of C in a metal matrix including (consisting of) Cu-Ni alloy grains obtained after sintering.

The deoxidation can be conducted by not only carbon but also phosphorus, zinc, manganese, or the like. However, there is a possibility of being incorporated as an impurity from a graphite crucible used in the case of producing powders with an atomizing method, and carbon is an element which is incorporated as an inevitable impurity. However, it is also possible to prevent incorporation of carbon by replacing the graphite crucible with an alumina crucible or the like.

The amount of C in the Cu-Ni alloy powder is preferably 0.003% to 0.068%, and more preferably 0.016% to 0.059%.

### "Porosity: 8 to 21 %"

Pores dispersedly distributed in a base (matrix) of a sintered material have an action of alleviating a strong friction and a high surface pressure which the bearing receives under high-pressure and high-speed circulation of liquid fuel, for example, in the case where a bearing consisting of the sintered sliding body 10 of the present embodiment is used in a fuel pump. Thereby, the pores remarkably suppress wear of the bearing. However, in the case where a porosity of the sintered sliding material 15 is less than 8%, a proportion of pores distributed in the base is small and the above-described effect of action is not sufficiently obtained, whereas in the case where the porosity of the sintered sliding body 10 is more than 21%, wear resistance decreases, which is not preferable.

The porosity is preferably 8.1% to 18.2%, and more preferably 11.2% to 16.6%. The percentage of the porosity is vol%.

### "Production method of sintered sliding material"

In order to produce the sintered sliding body 10 of the present embodiment, a Cu-Ni alloy powder, a Sn powder, a Cu-P powder, and a graphite powder are prepared as starting materials. Each of these powders preferably has a predetermined average particle diameter in a range of about 10 to 100 µm,

These powders are mixed so as to achieve a final target composition ratio, and then a lubricant such as zinc stearate is added at an amount of 0.1% to 1.0%, for example, about 0.5% and the mixture is mixed uniformly by a V type mixer for about several tens of minutes to obtain a mixed raw material powder. Next, the mixed raw material powder is charged into a mold of a press machine, and the mixed raw material powder is press-molded to obtain a target shape, for example, a ring-shaped green compact.

The green compact is sintered at a predetermined temperature in a range of 860°C to 970°C in, for example, an endothermic gas atmosphere, and the endothermic gas atmosphere is obtained by a method which includes: mixing natural gas and air; and passing the mixture through a heated catalyst to decompose and convert the mixture. Thereby, it is possible to obtain a targeted ring-shaped sintered sliding material.

Sn (about 232°C) and Cu-P (about 714°C), which are low melting-point raw materials, melt during the sintering procedure, Sn and P diffuse into grains (particles) including (consisting of) a Cu-Ni alloy (powder) and are alloyed therewith. Therefore, after sintering, the sintered sliding body 10 having the structure shown in FIG. 2 is obtained, and in the structure, the free graphite 13 exists in pore portions of grain boundaries of the Cu-Ni alloy grains in which Sn and P are solid-solubilized.

Further, when Sn and P diffuse into grains (particles) including (consisting of) a Cu-Ni alloy (powder) to form Cu-Ni alloy grains in which Sn and P are solid-solubilized, the Sn-rich alloy layer is formed.

When producing the Cu-Ni alloy powder, an atomizing method is used, in which a molten alloy is rapidly cooled to perform pulverization. C contained in the alloy powder can be reduced by controlling an addition amount of C used for deoxidation, a material of a crucible, time to melt the alloy, a melting temperature of the alloy, and the like.

The sintered sliding body 10 produced as described above is a sintered material obtained by sintering Cu-Ni alloy grains, and it is obtained as a sintered sliding body in which free carbon is dispersed in pores of grain boundaries of Cu-Ni alloy grains. Thus, it is possible to provide a sintered sliding body which is excellent in wear resistance and lubricity and which is excellent in corrosion resistance under high-temperature corrosive environment required for a sliding material to be used under high-temperature corrosive environments.

Further, by setting an amount of C as an impurity contained in grains of the Cu-Ni alloy to be in a range of 0.001 % to 0.07%, it is possible to provide the sintered sliding body 10 which is hard to cause a large dimensional change such as abnormal expansion or shrinkage before and after sintering, and can be produced with good yield.

Further, the sintered sliding body 10 of the present embodiment is suitable as a bearing member, a bush for EGR, or the like which is always immersed in gasoline such as a motor-type fuel pump, and it can provide a sintered sliding material which is excellent in corrosion resistance and wear resistance even in the case of being immersed in mixed gasoline, which contains corrosive liquid such as light oil, alcohol, or other organic acids in gasoline, depending on regions.

Furthermore, the sintered sliding body 10 is also suitable for a bearing member used in a recirculation exhaust gas flow-rate adjustment valve, and it is possible to provide a sintered sliding body which is excellent in wear resistance and corrosion resistance even under a severe environment exposed to high-temperature exhaust gas.

### EXAMPLES

Hereinafter, the present invention will be described in more detail with reference to examples, but the present invention is not limited to these examples.

### "Example 1"

As raw material powders, a Cu-Ni powder with a particle diameter of 150 µm (100 mesh), a Sn atomized powder with a particle diameter of 61 µm (250 mesh), a Cu-8%P atomized powder with a particle diameter of 75 µm (200 mesh), and a graphite powder with a particle diameter of 104 µm (150 mesh) were prepared. The atomized powders are powders obtained by a method which included: forming a molten alloy having a target composition in a crucible in a high-frequency melting furnace; and spraying this molten alloy into water from an injection nozzle at a bottom of the crucible and rapidly cooling the molten alloy to be pulverized. In the atomizing method used in the examples, an atomizing device is used in which an inverted conical jet water stream was injected from an injection flow path provided inside a molten metal blowout part of an injection nozzle and the molten metal was sprayed toward the inverted conical jet water stream to be pulverized.

These raw material powders were blended in blending proportions as shown in Table 1 so as to obtain a final component composition as shown in Table 2 below, and 0.5% of zinc stearate was added. The mixture was mixed by a V type mixer for 20 minutes, and then the mixture was press-molded to produce a green compact. Next, this green compact was sintered at a predetermined temperature in a range of 860°C to 970°C shown in Table 1 in an endothermic gas atmosphere. The endothermic gas atmosphere was obtained by a method which included: mixing natural gas and air; and passing the mixture through a heated catalyst to decompose and convert the mixture. Then, sizing was performed at a predetermined pressure in a range of 200 to 700 MPa to obtain a sintered sliding material.

Each of the sintered sliding materials had a dimension of an outer diameter of 10 mm × an inner diameter of 5 mm × a height of 5 mm and was a ring-shaped sintered sliding body (bearing member) consisitng of a Cu-Ni-Sn-based sintered alloy having a component composition shown in Table 2 below. Examples of sample Nos. 1 to 15, and ring-shaped test pieces of sample Nos. 1 to 7 having the same shape as comparative examples were produced and the following tests were conducted.

In the raw material powders, an amount of C as an impurity element contained in the Cu-Ni powder was controlled by adjusting an amount of impurities contained in the raw materials before an atomizing treatment for producing the Cu-Ni powder.

Specifically, samples of Examples Nos. 1 to 15 were prepared by blending the raw materials having impurity amounts (C amounts) shown in Table 1 so as to have compositions shown in Table 1 and Table 2. In addition, samples of Comparative Examples Nos. 1 to 7 were prepared by using and blending raw materials having impurity C amounts shown in Table 1 as so as to have compositions shown in Table 1 and Table 2.

The porosity, the radial crushing strength, the rate of dimensional change, the product yield, the corrosion resistance, and the wear resistance were tested using the samples of Examples Nos. 1 to 15 and the samples of Comparative Examples Nos. 1 to 7. The results are shown all together in Table 2.

In the component composition shown in Table 2, the C (Free) column represents mass% of C intervening at grain boundaries as free graphite. In addition, the C (Combined) column represents mass% of C alloyed with and contained in the alloy grains. Furthermore, the C (Total: total amount) represents a total amount, by mass%, of C contained in the sample as C (Free) and C (Combined).

Details for measurement methods of the rate of dimensional change, the determination criteria of product yield, the corrosion resistance test evaluating the corrosion resistance, and the wear resistance test evaluating the wear resistance which are shown in Table 2 are as follows.
· Rate of dimensional change (DC): An outer diameter dimension of a molded body (green compact) after press molding was measured in advance before sintering and sintering was carried out. The outer diameter dimension of the sintered body (sintered sliding material) after sintering was measured, and a rate of dimensional change before and after sintering was calculated and obtained.
· Yield: A ratio of samples of which an inner diameter dimension of a sized body after sizing was within a dimensional tolerance (0.006 mm) was taken as a yield. From measurement results of 50 samples, the case where 96% or more of the samples were acceptable (within the dimensional tolerance (0.006 mm)) was determined as A, the case where 90% or more and less than 96% of the samples were acceptable was determined as B, and the case where less than 90% of the samples were acceptable was determined as C.
· Corrosion resistance test: Supposing pseudo bad gasoline, an organic acid test liquid which was produced by adding carboxylic acid represented by RCOOH (R is a hydrogen atom or a hydrocarbon group) to gasoline.

A corrosion resistance test was conducted by immersing a plurality of sample bearing members 1 in this organic acid test liquid for 200 hours in a hot bath (60°C).

After the corrosion resistance test, products attached to a surface of the bearing member 1 were removed with chemicals, a rate of change of mass was measured from a mass of the bearing member 1 before immersion in the organic acid test liquid and a mass of the bearing member 1 after removing the attached products after immersion. In the column of corrosion resistance of each table, a sample with 0 ≥ (rate of change of mass) ≥ -0.50% was indicated by A, and a sample with -0.50% > (rate of change of mass) was indicated by C.

· Wear resistance test of bearing for fuel pump: A wear resistance test was conducted under conditions where gasoline circulated in a narrow space at a high speed, and a bearing received a high pressure due to high-speed rotation of a motor causing such circulation and the bearing was exposed to gasoline of a high flow speed. The bearing member 1 was assembled into a fuel pump whose outer dimension was 110 mm × 40 mm in length, and the fuel pump was installed in a gasoline tank.

An actual machine test was conducted under conditions where an impeller rotation speed was 5,000 to 15,000 rpm, a gasoline flow rate was 50 to 250 liters/hour, a pressure that the bearing member 1 received from a high-speed rotation was a maximum of 500 kPa, and a test time was 500 hours. In a maximum wear depth on a bearing surface after the test, a sample with 0 ≤ (maximum wear depth) ≤ 10 µm was indicated by A, and a sample with 10 µm < (maximum wear depth) was indicated by C.

This result is described in the column of wear resistance (1).

· Wear resistance test of bearing for recirculation exhaust gas flow-rate adjustment valve: A shaft made of a stainless steel (JIS·SUS 303) having a dimension of a diameter of φ5 × a length of 60 mm and the bearing member 1 were assembled together into a recirculation exhaust gas flow-rate adjustment valve of an EGR type gasoline engine, and a wear test was conducted under conditions where an engine rotation speed was 3,000 rpm, a stainless steel shaft reciprocating distance was 10 mm, a stainless steel shaft reciprocating number was 150 times/minute, and a test time was 500 hours. After the wear test, the maximum wear depth of the bearing was measured.

The temperature of the bearing under test was in a range of 420°C to 435°C.

In a maximum wear depth on a bearing surface after the test, a sample with 0 ≤ (maximum wear depth) ≤ 70 µm was indicated by A, and a sample with 70 µm < (maximum wear depth) was indicated by C. This result is described in the column of wear resistance (2).
· A porosity was measured in accordance with the open porosity test method JPMA M 02-1992 of sintered metal material published by the Japan Powder Metallurgy Association.

### <Carbon analysis in raw material powder and sintered body>

The amount of impurity carbon in the Cu-Ni powder was measured by an infrared absorption method.

Further, in the total amount of C contained in each sample of sintered body, the ratio of C (free) intervening at grain boundaries as free graphite to C (Combined) alloyed with and contained in alloy grains was obtained by the following method.

First, the total amount of C contained in a sintered bearing of a sample was measured by infrared absorption method (gas analysis). Next, analysis of the amount of C (Free) contained as free carbon was carried out according to the method of JIS G1211-1995. The amount of C (Combined) alloyed with and contained in the alloy grains was obtained by subtracting the amount of the free graphite from the total amount of C.

**Table 1**

| Bearing | | Blending composition (mass%) of raw material powders | | | | | Combined C (mass%) in Cu-Ni powder | Sintering temperature (°C) |
|---|---|---|---|---|---|---|---|---|
| | | Cu-Ni powder | Cu-P powder | Sn powder | Graphite (C) powder | Total | | |
| Invention Example | 1 | Cu-13%Ni:78% | Cu-8%P:4.0 | 9 | 9 | 100 | 0.010 | 870 |
| | 2 | Cu-15%Ni:85.5% | Cu-8%P:3.0 | 7 | 4.5 | 100 | 0.034 | 860 |
| | 3 | Cu-20%Ni:79.5% | Cu-8%P:5.0 | 11 | 4.5 | 100 | 0.028 | 890 |
| | 4 | Cu-20%Ni:86% | Cu-8%P:3.0 | 5 | 6 | 100 | 0.035 | 900 |
| | 5 | Cu-25%Ni:88% | Cu-8%P:0 | 7 | 5 | 100 | 0.032 | 915 |
| | 6 | Cu-25%Ni:80.5% | Cu-8%P:4.0 | 10 | 5.5 | 100 | 0.001 | 920 |
| | 7 | Cu-30%Ni:80% | Cu-8%P:5.0 | 10 | 5 | 100 | 0.017 | 900 |
| | 8 | Cu-30%Ni:80% | Cu-8%P:3.0 | 12 | 5 | 100 | 0.045 | 915 |
| | 9 | Cu-30%Ni:81.5% | Cu-8%P:2.5 | 9 | 7 | 100 | 0.051 | 940 |
| | 10 | Cu-30%Ni:81% | Cu-8%P:8.0 | 6 | 7 | 102 | 0.039 | 950 |
| | 11 | Cu-30%Ni:82.5% | Cu-8%P:2.5 | 10 | 5 | 100 | 0.017 | 910 |
| | 12 | Cu-35%Ni:79% | Cu-8%P:5.0 | 11 | 5 | 100 | 0.064 | 920 |
| | 13 | Cu-35%Ni:78.5% | Cu-8%P:7.5 | 9 | 5 | 100 | 0.041 | 910 |
| | 14 | Cu-40%Ni:80.5% | Cu-8%P:10 | 5 | 4.5 | 100 | 0.053 | 970 |
| | 15 | Cu-40%Ni:81% | Cu-8%P:4.0 | 10 | 5 | 100 | 0.053 | 930 |
| Comparative Example | 1 | Cu-10%Ni:85% | Cu-8%P:3.0 | 8 | 4 | 100 | 0.006 | 850 |
| | 2 | Cu-20%Ni:92% | Cu-8%P:3.0 | 1 | 4 | 100 | 0.063 | 890 |
| | 3 | Cu-30%Ni:79% | Cu-8%P:3.0 | 14 | 4 | 100 | 0.037 | 890 |
| | 4 | Cu-40%Ni:67% | Cu-8%P: 15 | 9 | 9 | 100 | 0.053 | 925 |
| | 5 | Cu-30%Ni:76% | Cu-8%P:5.0 | 8 | 11 | 100 | 0.055 | 925 |
| | 6 | Cu-40%Ni:87.5% | Cu-8%P:3.0 | 9 | 0.5 | 100 | 0.053 | 890 |
| | 7 | Cu-40%Ni:80% | Cu-8%P:5.0 | 9 | 6 | 100 | 0.127 | 890 |

**Table 2**

| Bearing | | Component composition (mass%) | | | | | Combined C (mass%) in sintered material | Free C (mass%) in sintered material | Porosity (%) | Radial crushing strength (MPa) | Rate of dimensional change (%) | Product yield (%) | Corrosion resistance | Wear resistance (1) | Wear resistance (2) |
|---|---|---|---|---|---|---|---|---|---|---|---|---|---|---|---|
| | | Ni | Sn | P | C(Total) | Cu | | | | | | | | | |
| Invention Example | 1 | 10.1 | 8.8 | 0.3 | 8.8 | Remainder | 0.016 | 8.784 | 8.1 | 205 | 0.9 | A | A | A | A |
| | 2 | 12.7 | 6.9 | 0.2 | 4.4 | Remainder | 0.032 | 4.368 | 11.2 | 215 | 0.3 | A | A | A | A |
| | 3 | 15.9 | 11 | 0.4 | 4.2 | Remainder | 0.030 | 4.17 | 13.5 | 193 | 0.8 | A | A | A | A |
| | 4 | 17.2 | 5.1 | 0.2 | 6.0 | Remainder | 0.041 | 5.959 | 12.8 | 177 | 1.0 | B | A | A | A |
| | 5 | 22.0 | 7.3 | 0 | 5.0 | Remainder | 0.050 | 4.95 | 13.1 | 202 | 1.2 | B | A | A | A |
| | 6 | 20.1 | 9.9 | 0.3 | 5.3 | Remainder | 0.003 | 5.297 | 20.8 | 184 | 0.5 | A | A | A | A |
| | 7 | 24.0 | 9.8 | 0.4 | 4.7 | Remainder | 0.022 | 4.678 | 15.3 | 238 | 0.8 | A | A | A | A |
| | 8 | 24.0 | 11.7 | 0.5 | 5.1 | Remainder | 0.033 | 5.067 | 17.9 | 240 | 1.0 | A | A | A | A |
| | 9 | 24.5 | 9.0 | 0.2 | 6.7 | Remainder | 0.066 | 6.634 | 16.6 | 219 | 1.3 | B | A | A | A |
| | 10 | 24.3 | 5.9 | 0.6 | 6.7 | Remainder | 0.049 | 6.651 | 14.8 | 232 | 1.1 | A | A | A | A |
| | 11 | 24.8 | 9.9 | 0.2 | 4.9 | Remainder | 0.021 | 4.879 | 12.6 | 264 | 1.4 | B | A | A | A |
| | 12 | 27.7 | 10.8 | 0.4 | 5 | Remainder | 0.068 | 4.932 | 18.2 | 259 | 1.2 | A | A | A | A |
| | 13 | 27.5 | 9.7 | 0.6 | 5 | Remainder | 0.046 | 4.954 | 16.6 | 278 | 1.0 | A | A | A | A |
| | 14 | 32.3 | 5.2 | 0.8 | 4.3 | Remainder | 0.055 | 4.245 | 14.8 | 276 | 0.8 | A | A | A | A |
| | 15 | 32.6 | 10.0 | 0.3 | 4.6 | Remainder | 0.059 | 4.541 | 15.5 | 268 | 1.1 | A | A | A | A |
| Comparative Example | 1 | 8.7 | 7.7 | 0.2 | 4 | Remainder | 0.005 | 3.995 | 7.5 | 191 | 0.3 | A | C | A | A |
| | 2 | 18.4 | 1.1 | 0.2 | 4.2 | Remainder | 0.054 | 4.146 | 12.8 | 176 | 1.1 | B | C | C | C |
| | 3 | 23.7 | 14.3 | 0.2 | 4.2 | Remainder | 0.033 | 4.167 | 18.7 | 297 | 1.7 | C | A | A | A |
| | 4 | 26.8 | 9.1 | 1.2 | 8.7 | Remainder | 0.052 | 8.648 | 10 | 211 | 1.7 | C | A | A | A |
| | 5 | 22.8 | 7.7 | 0.4 | 10.8 | Remainder | 0.066 | 10.734 | 14 | 98 | 2.0 | C | A | C | C |
| | 6 | 35.2 | 8.7 | 0.2 | 0.5 | Remainder | 0.057 | 0.443 | 15 | 413 | 0.3 | B | A | C | C |
| | 7 | 32.1 | 9.1 | 0.4 | 6.2 | Remainder | 0.139 | 6.061 | 21.5 | 305 | 2 | C | A | A | A |

| | | | | | | | | | | | | | | | |
|---|---|---|---|---|---|---|---|---|---|---|---|---|---|---|---|
| Symbols and ranges of product yield A: >96%, B: 90% to 96%, C: <90% Wear resistance (1): Each of bearings of invention examples and comparative examples was assembled into a fuel pump and a durability test was conducted. Wear resistance (2): Each of bearings of invention examples and comparative examples was assembled into a recirculation exhaust gas flow-rate adjustment valve and a durability test was conducted. | | | | | | | | | | | | | | | |

Table 1 shows the blending composition at the time of preparing samples of the examples, the amount of Combined C in the Cu-Ni alloy powder, the amount of Free C in the sintered material, and the sintering temperature.

In the samples of Examples Nos. 1 to 15, Combined C in the Cu-Ni alloy powder was, by mass%, 0.001% to 0.07%.

It can be seen that the samples of Examples Nos. 1 to 15 were sintered sliding bodies having good product yield due to a low rate of dimensional change, high radial crushing strength, excellent corrosion resistance and wear resistance.

Further, the sintered sliding bodies shown in the results of Table 2 were sintered sliding bodies having a composition including, by mass%, 10.1 % to 32.6% of Ni, 5. 1% to 11.7% of Sn, 0% to 0.8% of P, and 4.2% to 8.8% of C, with a remainder of Cu and inevitable impurities, the sintered sliding materials were sintered bodies of Cu-Ni alloy grains, the sintered sliding materials had a structure in which pores are dispersedly formed in grain boundaries of a plurality of the alloy grains, and C was contained at an amount of, by mass%, 0.003% to 0.068% in a metal matrix including (consisting of) the alloy grains.

With regard to the sample of Comparative Example No. 1, the amount of Ni was small, and the corrosion resistance was poor.

With regard to the sample of Comparative Example No. 2, the amount of Sn was small, and both of the corrosion resistance and the wear resistance were poor.

With regard to the sample of Comparative Example No. 3, the amount of Sn was excessively large, and the rate of dimensional change was high and the product yield was poor.

With regard to the sample of Comparative Example No. 4, the amount of P was excessively large, and the rate of dimensional change was high and the product yield was poor.

With regard to the sample of Comparative Example No. 5, the amount of C was excessively large, and the product yield was poor due to a high rate of dimensional change and the crushing strength was low.

With regard to the sample of Comparative Example No. 6, the amount of Ni was large and the amount of C was excessively small. The wear resistance was poor due to the small amount of C. Regarding the amount of Ni, in the case where a sample contains a large amount of expensive Ni, it becomes a material with high cost.

With regard to the sample of Comparative Example No. 7, the amount of C in grains of of the sintered material was large, and the amount of C was excessively large. The rate of dimensional change was high and the product yield was poor.

From the above-described results, it can be seen that as long as the samples of the examples satisfy the above-described conditions, it is possible to provide a sintered sliding body having good yield due to a low rate of dimensional change, high radial crushing strength, excellent corrosion resistance and wear resistance.

### Reference Signs List

1: bearing member
2: fuel pump
3: casing
5: motor (armature)
6: rotating shaft
7: impeller
8: intake port
9: delivery port
11: alloy grain
12: pore
13: free graphite
15: exposed portion

## Claims

1. A sintered sliding body having a composition comprising, by mass%, 10% to 35% of Ni, 5% to 12% of Sn, 0% to 0.9% of P, and 4.1% to 9% of C, with a remainder of Cu and inevitable impurities,
wherein the sintered sliding body is a sintered body of a plurality of Cu-Ni alloy grains (11) containing Sn and C,
the sintered sliding body has a structure in which pores (12) are dispersedly formed in grain boundaries of the plurality of alloy grains (11) and free graphite (13) is distributed in the pores (12),
an amount of C in a metal matrix including the alloy grains (11) is, by mass%, 0.001% to 0.07%,
a porosity of the sintered body is 8% to 21%, and
the porosity is measured in accordance with the open porosity test method JPMA M 02-1992 of sintered metal material published by the Japan Powder Metallurgy Association.

2. The sintered sliding body according to claim 1,
wherein a Sn-rich alloy layer is formed in an outer circumferential portion of the sintered body and in the pores (12) of the sintered body, and
the Sn-rich alloy layer contains 30 mass% or more of Sn.

3. A method for producing a sintered sliding body which is a method for producing the sintered sliding body according to claim 1 or claim 2, the method comprising:
mixing a Cu-Ni alloy powder in which an amount of C is in a range of 0.001 to 0.07 mass%, a Sn powder, and a Cu-P alloy powder so as to have a total composition including, by mass%, 10% to 35% of Ni, 5% to 12% of Sn, 0% to 0.9% of P, and 0.001% to 0.07% of C, with a remainder of Cu and inevitable impurities, thereby obtaining a raw material powder;
mixing the raw material powder with a graphite powder to obtain a mixed raw material powder so that a total sum of C contained in the raw material powder and C contained in the graphite powder becomes 4.1% to 9% in the mixed raw material powder, and press-molding and sintering the mixed raw material powder to obtain a sintered body; and
sizing the sintered body.

## Patentansprüche

1. Gesinterter Gleitkörper, der eine Zusammensetzung aufweist, umfassend, in Massen-%, 10% bis 35% Ni, 5% bis 12% Sn, 0% bis 0,9% P und 4,1% bis 9% C, mit einem Rest aus Cu und unvermeidbaren Verunreinigungen,
worin der gesinterte Gleitkörper ein gesinterter Körper aus einer Vielzahl von Cu-Ni-Legierungskörnern (11) ist, die Sn und C enthalten,
der gesinterte Gleitkörper eine Struktur aufweist, in der Poren (12) in Korngrenzen der Vielzahl von Legierungskörnern (11) dispers ausgebildet sind und freier Graphit (13) in den Poren (12) verteilt ist,
eine Menge an C in einer Metallmatrix, die die Legierungskörner (11) umfasst, in Massen-%, 0,001 bis 0,07% beträgt,
eine Porosität des gesinterten Körpers 8% bis 21% beträgt und
die Porosität gemäß der von der Japan Powder Metallurgy Association veröffentlichten offenen Porositätstestmethode JPMA M 02-1992 für gesintertes Metallmaterial gemessen wird.

2. Gesinterter Gleitkörper gemäß Anspruch 1,
worin eine Sn-reiche Legierungsschicht in einem Außenumfangsabschnitt des Sinterkörpers und in den Poren (12) des Sinterkörpers ausgebildet ist und
die Sn-reiche Legierungsschicht 30 Massen-% oder mehr Sn enthält.

3. Verfahren zur Herstellung eines gesinterten Gleitkörpers, das ein Verfahren zur Herstellung des gesinterten Gleitkörpers gemäß Anspruch 1 oder Anspruch 2 ist, das Verfahren umfassend:
das Mischen eines Cu-Ni-Legierungspulvers, bei dem eine Menge an C in einem Bereich von 0,001 bis 0,07 Massen-% liegt, eines Sn-Pulvers und eines Cu-P-Legierungspulvers, um eine Gesamtzusammensetzung zu haben, die, in Massen-%, 10% bis 35% Ni, 5% bis 12% Sn, 0% bis 0,9% P und 0,001% bis 0,07% C umfasst, mit einem Rest aus Cu und unvermeidbaren Verunreinigungen, wodurch ein Rohmaterialpulver erhalten wird;
das Mischen des Rohmaterialpulvers mit einem Graphitpulver, um ein gemischtes Rohmaterialpulver zu erhalten, so dass die Gesamtsumme an im Rohmaterialpulver enthaltenem C und im Graphitpulver enthaltenem C im gemischten Rohmaterialpulver 4,1% bis 9% beträgt, und das Pressformen und das Sintern des gemischten Rohmaterialpulvers, um einen Sinterkörper zu erhalten; und
das Dimensionieren des Sinterkörpers.

## Revendications

1. Corps de glissement fritté ayant une composition comprenant, en masse, 10 % à 35 % de Ni, 5% à 12 % de Sn, 0 % à 0,9 % de P, et 4,1 % à 9 % de C, avec un reste constitué de Cu et d'impuretés inévitables,
dans lequel le corps de glissement fritté est un corps fritté constitué d'une pluralité de grains (11) d'alliage Cu-Ni contenant Sn et C,
le corps de glissement fritté a une structure dans laquelle des pores (12) sont formés de manière dispersée dans des limites de grain de la pluralité de grains (11) d'alliage et du graphite (13) libre est distribué dans les pores (12),
une quantité de C dans une matrice métallique comportant les grains (11) d'alliage est, en % en masse, de 0,001 % à 0,07 %,
une porosité du corps fritté est de 8 % à 21 %, et
la porosité est mesurée conformément procédé d'essai de porosité ouverte JPMA M 02-1992 sur un matériau métallique fritté publié par Japan Powder Metallurgy Association.

2. Corps de glissement fritté selon la revendication 1,
dans lequel une couche d'alliage riche en Sn est formée dans une partie circonférentielle externe du corps fritté et dans les pores (12) du corps fritté, et
la couche d'alliage riche en Sn contient 30 % en masse ou plus de Sn.

3. Procédé de production d'un corps de glissement fritté qui est un procédé de production du corps de glissement fritté selon la revendication 1 ou la revendication 2, le procédé comprenant :
le mélange d'une poudre d'alliage Cu-Ni dans laquelle une quantité de C est dans une plage de 0,001 à 0,07 % en masse, d'une poudre de Sn, et d'une poudre d'alliage Cu-P de manière à avoir une composition totale comportant, en % en masse, 10 % à 35 % de Ni, 5 % à 12 % de Sn, 0 % à 0,9 % de P, et 0,001 % à 0,07 % de C, avec un reste constitué de Cu et d'impuretés inévitables, obtenant ainsi une poudre de matière première ;
le mélange de la poudre de matière première avec une poudre de graphite pour obtenir une poudre de matière première mélangée de sorte qu'une somme totale de C contenu dans la poudre de matière première et de C contenu dans la poudre de graphite devient de 4,1 % à 9 % dans la poudre de matière première mélangée, et le moulage à la presse et le frittage de la poudre de matière première mélangée pour obtenir un corps fritté ; et
le dimensionnement du corps fritté.
